Europäisches Patentamt

European Patent Office

Office européen des brevets

(19)

(11) Veröffentlichungsnummer: **0 131 956**

**A1**

# (12) EUROPÄISCHE PATENTANMELDUNG

(21) Anmeldenummer: **84108410.6**

(22) Anmeldetag: **17.07.84**

(51) Int. Cl.⁴: **F 16 L 47/04**
F 16 L 15/04, F 16 L 21/00

(30) Priorität: **18.07.83 DE 8320655 U**

(43) Veröffentlichungstag der Anmeldung:
**23.01.85 Patentblatt 85/4**

(84) Benannte Vertragsstaaten:
**FR GB**

(71) Anmelder: **Preussag AG**
**Leibnizufer 9**
**D-3000 Hannover 1(DE)**

(72) Erfinder: **Wagler, Peter**
**In der Harst 7**
**D-3160 Lehrte - OT Ahlten(DE)**

(72) Erfinder: **May, Christian**
**Hermann-Löns-Strasse 9**
**D-3153 Lahstedt 5(DE)**

(74) Vertreter: **Leine, Sigurd, Dipl.-Ing.**
**LEINE & KÖNIG Patentanwälte Burckhardtstrasse 1**
**D-3000 Hannover 1(DE)**

(54) Gewinderohrmuffe.

(57) Eine Gewinderohrmuffe (1) zur Verbindung von Rohren, insbesondere von Brunnenrohren oder Pumpensteigrohren, mit einer Innenwandung, wobei in der Mitte der Gewinderohrmuffe (1) ein Innenflansch (4) nach innen vorspringt, der mit Nuten (6,7,10,11) zur Aufnahme von Dichtungen (12,13,14,15) bzw. mit vorspringenden Dichtkanten (16,17,18,19) versehen ist. Dieser Innenflansch (4) läßt sich ohne Schwierigkeiten herstellen, insbesondere dann, wenn die Gewindemuffe (1) aus Kunststoff, beispielsweise aus PVC, gespritzt ist. Der Innenflansch (4) gewährleistet eine genau definierte Einschraubtiefe und somit eine maximale Zugfestigkeit der Schraubverbindung.

FIG. 1

LEINE & KÖNIG

PATENTANWÄLTE

0131956

PREUSSAG

Aktiengesellschaft

Dipl.-Ing Sigurd Leine   Dipl.-Phys Dr Norbert König

Burckhardtstraße 1         Telefon (05 11) 62 30 05
D-3000 Hannover 1

Unser Zeichen          Datum
572/34        29. Juni 1983

Gewinderohrmuffe

Die Neuerung betrifft eine Gewinderohrmuffe zur Verbindung von Rohren, insb. von Brunnenrohren oder Pumpensteigrohren.

Bekannte Gewinderohrmuffen der betreffenden Art weisen ein durchgehendes Innengewinde auf, wobei die Abdichtung der eingeschraubten Rohrenden entweder durch eine Dichtung erfolgt, die zwischen den Stirnrändern der Rohre angeordnet ist, oder durch Dichtmittel, die mit in die Gewindegänge eingeschraubt werden.

Diese bekannte Gewinderohrmuffe hat den Nachteil, daß die Einschraubtiefe der Rohrenden nicht sicher vorbestimmt ist. Bei der Verbindung zweier Rohrenden mit einer derartigen Gewinderohrmuffe besteht daher die Gefahr, daß das Gewindeende des einen Rohres wesentlich tiefer als das Gewindeende des anderen zu verbindenden Rohres in die Gewinderohrmuffe eingeschraubt wird. Dadurch leidet die Festigkeit und auch die Abdichtung. Im Falle des Einbringens von Dichtmitteln in die Gewindegänge erfordert das Verschrauben verhältnismäßig große Schraubkräfte, was insb. bei Kunststoffrohren, wie sie häufig im Brunnenbau eingesetzt werden, von Nachteil ist. Darüber hinaus ist ein Lösen und Neuverschrauben aufwendig, weil vor einer Neuverschraubung das alte Dichtmittel entfernt und neues angebracht werden muß.

Es ist auch bekannt, Brunnenrohre am einen Ende aufzumuffen und dort mit einem Innengewinde und am anderen Ende mit einem Außengewinde zu versehen, so daß eine Verbindung durch Verschraubung möglich ist. Das Aufmuffen stellt jedoch einen beträchtlichen Aufwand dar. Außerdem hat sich gezeigt, daß durch das Aufmuffen insb. im Übergangsbereich zwischen den unterschiedlichen Durchmessern des Rohres und der Aufmuffung Spannungen im Kunststoff entstehen. Hinzu kommen Spannungen durch Zugkräfte innerhalb eines verschraubten Rohrstranges, so daß in den genannten Übergangsbereichen häufig Brüche auftreten.

Der Neuerung liegt die Aufgabe zugrunde, die Nachteile der bekannten Schraubverbindungen zu vermeiden und eine Schraubmuffe der betreffenden Art zu schaffen, die eine einfache, zugfeste, dichte, leicht herzustellende und ohne Schwierigkeiten wiederholt lösbare Verbindung von Rohrenden ermöglicht.

Die der Neuerung zugrundeliegende Aufgabe wird durch eine Gewindemuffe der betreffenden Art gelöst, bei der von der Innenwandung der Gewindemuffe entfernt von deren axialen Enden ein Innenflansch nach innen vorspringt. Dieser Innenflansch läßt sich ohne Schwierigkeiten herstellen, insb. dann, wenn die Gewindemuffe aus Kunststoff , z.B. PVC, gespritzt ist. Der Innenflansch gewährleistet eine genau definierte Einschraubtiefe und somit eine maximale Zugfestigkeit der Schraubverbindung.

Die radiale Ausdehnung des Innenflansches entspricht zweckmäßigerweise der Stärke der Wandung der einzuschraubenden Rohre. Dadurch ergibt sich ein glatter Verlauf der Innenwand des verschraubten Rohrstranges. Grundsätzlich ermöglicht der radiale Innenflansch gemäß der Neuerung eine Abdichtung der miteinander zu verbindenden Rohrenden durch Dichtscheiben oder Dichtringe, die jeweils zwischen dem Innenflansch und dem Stirnrand des eingeschraubten Rohrendes angeordnet sind.

Gemäß einer Weiterbildung der Neuerung ist wenigstens auf einer Seite des Innenflansches in der Innenwandung der Gewindemuffe eine radiale Innennut angeordnet, in die eine Dichtscheibe mit ihrem äußeren Rand eingreift. Auf diese Weise ist die Dichtscheibe unverlierbar, so daß die derart gestaltete Gewindemuffe eine komplette Baueinheit darstellt, bei der bei der Montage keine Aufmerksamkeit der Einschraubtiefe und der Abdichtung geschenkt zu werden braucht.

Eine andere Weiterbildung der Neuerung besteht darin, daß der Innenflansch wenigstens auf einer Seite eine in axiale Richtung offene Nut aufweist. In diese Nut kann zu Abdichtungszwecken ein Dichtring eingelegt werden, er kann aber auch bereits vorher dort angeordnet sein. Um dabei eine fest miteinander verbundene Einheit zu schaffen, ist es zweckmäßig, daß der Dichtring klemmend in der axialen Nut gehalten oder im Falle der Herstellung der Gewindemuffe aus thermoplastischem Kunststoff in die axiale Nut eingespritzt ist. Dieses Einspritzen ist ohne größeren Zeitaufwand möglich, und der Dichtring ist unverlierbar und zum Teil gesichert gegen Beschädigungen fest mit der Gewindemuffe zu der Baueinheit verbunden. Zweckmäßigerweise ist der Dichtring ein O-Ring.

Grundsätzlich läßt sich die neuerungsgemäße Gewinderohrmuffe aus jedem beliebigen Material herstellen. Besonders zweckmäßig ist jedoch die Herstellung aus Kunststoff , insb. Polyvenylchlorid, so daß die Herstellung in einem Arbeitsgang ohne komplizierte Bearbeitungsgänge möglich ist.

Anhand der Zeichnung soll die Neuerung an Ausführungsbeispielen näher erläutert werden.

Fig. 1 zeigt einen Schnitt durch ein Ausführungsbeispiel einer Gewinderohrmuffe gemäß der Neuerung,

Fig.2, 3 und 4 zeigen einen Ausschnitt A in Fig. 1 vergrößert und in verschiedenen Ausführungsformen.

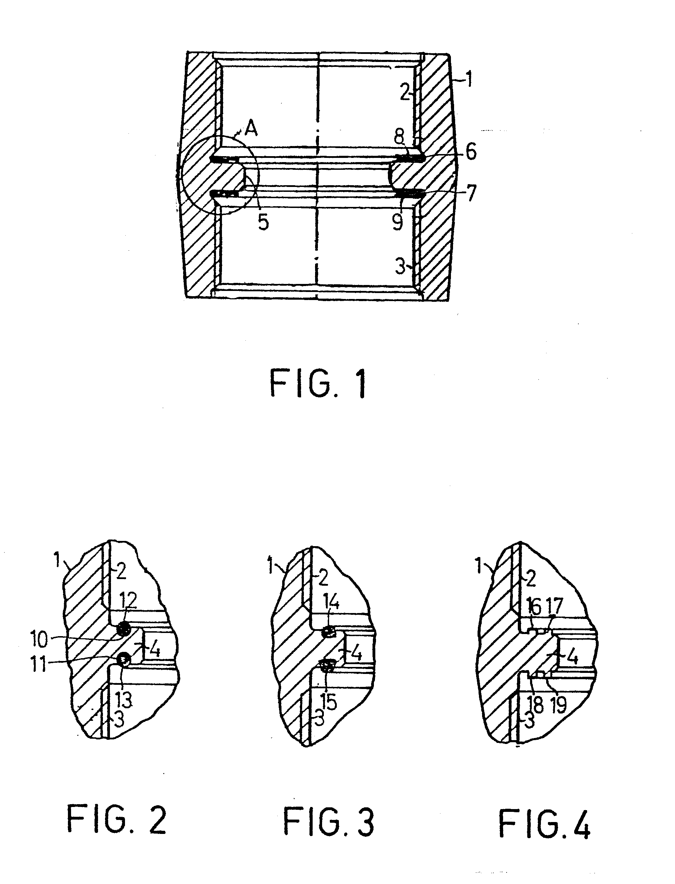

In Fig. 1 ist eine Gewinderohrmuffe 1 im Axialschnitt dargestellt, in der sich Innengewinde 2 und 3 zum Einschraube von Rohrenden mit entsprechendem Außengewinde befinden. In der Mitte zwischen den beiden Innengewinden 2 und 3 erstreckt sich ein Innenflansch 4 radial nach innen, und zwar so weit, daß der zwischen einer Innenkante 5 des Innenflansches 4 gemessene Durchmesser dem Innendurchmesser der zu verbindenden Rohre entspricht.

Zu beiden Seiten des Innenflansches 4 sind Innennuten 6 und 7 vorgesehen, in die Dichtscheiben 8 und 9 mit ihren äußeren Rändern eingreifen, so daß die Dichtscheiben nicht verlierbar sind.

Bei der Verwendung der in Fig. 1 gezeigten Gewinderohrmuffe werden ganz einfach die Gewindeenden der miteinander zu verbindenden Rohre in die Innengewinde 2 und 3 eingeschraubt, bis die Stirnkanten der zu verbindenden Rohre dicht gegen die Dichtscheiben 8 und 9 gezogen sind. Durch den Innenflansch 4 ist dabei die Einschraubtiefe vorgegeben.

Fig. 2 zeigt eine Einzelheit A aus Fig. 1 in abgewandelter Form. Bei dieser Ausführungsform befinden sich in dem Innenflansch 4 in axialer Richtung offene Nuten 1o und 11, in denen O-Ringe 12 und 13 klemmend gehalten sind. Die O-Ringe 12 und 13 können auch bei der Herstellung der Gewinderohrmuffe 1 durch Spritzen aus thermoplastischem Kunststoff mit eingespritzt sein.

Fig. 3 zeigt ebenfalls die Einzelheit A aus Fig. 1, wobei die Ausführungsform im wesentlichen der gemäß Fig. 2 entspricht. Der Unterschied besteht lediglich darin, daß andersartige Dichtungen 14 und 15 verwendet sind.

Fig. 4 zeigt in gleicher Weise die Einzelheit A aus Fig. 1 und verdeutlicht eine Abwandlung, bei der sich in den axialen Stirnflächen des Flansches 4 vorspringende, umlaufende Dichtkanten 16 - 19 befinden, die sich beim Festziehen der Stirnkanten gegen den Innenflansch 4 verformen und so eine Abdichtung herstellen.

Dipl.-Ing. Sigurd Leine  Dipl.-Phys. Dr. Norbert König

Burckhardtstraße 1          Telefon (05 11) 62 30 05
D 3000 Hannover 1

Unser Zeichen              Datum
572/34 EP   16. Juli 1984

PREUSSAG

Aktiengesellschaft

## A n s p r ü c h e

1. Gewinderohrmuffe zur Verbindung von Rohren, insb. von Brunnenrohren oder Pumpensteigrohren, d a d u r c h   g e - k e n n z e i c h n e t , daß von der Innenwandung der Gewindemuffe entfernt von deren axialen Enden ein Innenflansch (4) nach innen vorspringt.

2. Gewinderohrmuffe nach Anspruch 1, d a d u r c h   g e - k e n n z e i c h n e t , daß die radiale Ausdehnung des Innenflansches (4) der Wandungsstärke der einzuschraubenden Rohre entspricht.

3. Gewinderohrmuffe nach Anspruch 1, d a d u r c h   g e - k e n n z e i c h n e t , daß wenigstens auf einer Seite des Innenflansches (4) in der Innenwandung der Gewindemuffe (1) eine radiale Innennut (6, 7) angeordnet ist, in die eine Dichtscheibe (8, 9) mit ihrem äußeren Rand eingreift.

4. Gewinderohrmuffe nach Anspruch 1, d a d u r c h   g e -

SL/H.

-2-

k e n n z e i c h n e t , daß der Innenflansch (4) wenigstens auf einer Seite eine in axiale Richtung offene Nut (1o, 11) aufweist.

5. Gewinderohrmuffe nach Anspruch 4, d a d u r c h g e - k e n n z e i c h n e t , daß in der axialen Nut (1o, 11) ein Dichtring (12, 13) angeordnet ist.

6. Gewinderohrmuffe nach Anspruch 5, d a d u r c h g e - k e n n z e i c h n e t , daß der Dichtring (12, 13) klemmend in der axialen Nut (1o, 11) gehalten ist.

7. Gewinderohrmuffe nach Anspruch 5, d a d u r c h g e - k e n n z e i c h n e t , daß die Gewindemuffe (1) aus thermoplastischem Kunststoff gespritzt ist und daß der Dichtring (12, 13) in die axiale Nut (1o, 11) eingespritzt ist.

8. Gewinderohrmuffe nach Anspruch 5, d a d u r c h g e - k e n n z e i c h n e t , daß der Dichtring (12, 13) ein O-Ring ist.

9. Gewinderohrmuffe nach einem der vorhergehenden Ansprüche, d a d u r c h g e k e n n z e i c h n e t , daß die Gewindemuffe (1) aus Kunststoff, insb. thermoplastischem Kunststoff besteht.

1o.  Gewinderohrmuffe nach Anspruch 1, d a d u r c h

g e k e n n z e i c h n e t , daß der Innenflansch (4) auf seinen axialen Stirnflächen vorspringende umlaufende Dichtkanten (16-19) aufweist.

FIG. 1

FIG. 2          FIG.3          FIG.4

## EUROPÄISCHER RECHERCHENBERICHT

| | EINSCHLÄGIGE DOKUMENTE | | EP 84108410.6 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.)4 |
|---|---|---|---|
| P,X | EP - A1 - 0 095 158 (GEWERKSCHAFT KERAMIKCHEMIE) | 1,2,9 | F 16 L 47/04 |
| A | * Gesamt * | 7 | F 16 L 15/04 |
| | -- | | F 16 L 21/00 |
| X | AT - B - 188 566 (ÖSTERR. KUNST-STOFFPRESSWERKE) | 1,2,9 | |
| A | * Gesamt * | 7 | |
| | -- | | |
| A | DE - B2 - 1 675 199 (BENTELER WERKE AG) | 1 | |
| | * Gesamt * | | |
| | -- | | |
| A | GB - A - 212 550 (ROECKNER) | 1,2 | |
| | * Gesamt * | | |
| | ---- | | |

| RECHERCHIERTE SACHGEBIETE (Int. Cl.)4 |
|---|
| F 16 L 15/00 |
| F 16 L 17/00 |
| F 16 L 19/00 |
| F 16 L 21/00 |
| F 16 L 47/00 |

Der vorliegende Recherchenbericht wurde für alle Patentansprüche erstellt.

| Recherchenort | Abschlußdatum der Recherche | Prüfer |
|---|---|---|
| WIEN | 25-09-1984 | SCHUGANICH |